Europäisches Patentamt

European Patent Office

Office européen des brevets

(11) Numéro de publication: **0 333 958**
**A1**

## (12) DEMANDE DE BREVET EUROPEEN

(21) Numéro de dépôt: 88400690.9

(51) Int. Cl.4: **F16D 3/41 , F16C 33/78**

(22) Date de dépôt: **22.03.88**

(43) Date de publication de la demande:
27.09.89 Bulletin 89/39

(84) Etats contractants désignés:
AT BE CH DE ES FR GB IT LI LU NL SE

(71) Demandeur: ECIA - EQUIPEMENTS ET
COMPOSANTS POUR L'INDUSTRIE
AUTOMOBILE

F-25400 Audincourt(FR)

(72) Inventeur: Hoblingre, André
28, rue Vincent d'Indy
F-25700 Valentigney(FR)
Inventeur: Ocard, Paul
7 bis, rue Charmois
F-25230 Seloncourt(FR)

(74) Mandataire: de Morgues, Marie Emma et al
Cabinet Lavoix 2, place d'Estienne d'Orves
F-75441 Paris Cédex 09(FR)

(54) **Dispositif de protection pour joint de cardan.**

(57) Ce dispositif comporte un boîtier creux (20) sensiblement cubique, formé par deux coquilles rigides ayant chacune un fond plein (21) et quatre parois évidées (22). Dans chacune des parois latérales (22) est formé un évidement interne semi-circulaire (24) qui est prolongé par un orifice (26) de diamètre inférieur, ce diamètre correspondant pratiquement à celui des paliers du croisillon à protéger. Les deux coquilles assemblées entourent à la fois la partie centrale du croisillon et les entrées des paliers (10) avec leurs joints d'étanchéité (14).

En outre, le boîtier contient de préférence une graisse qui contribue à l'étanchéité de sa jonction avec le croisillon et éventuellement constitue une réserve de lubrification.

FIG.3

# Dispositif de protection pour joint de cardan

Les joints de cardan comportent habituellement un croisillon dont chaque extrémité est placée à l'intérieur d'une douille à aiguilles ou autre palier destiné à être emmanché dans un alésage d'une fourche solidaire de l'un des organes à relier. Un joint d'étanchéité ferme l'entrée de ce palier.

On constate toutefois que, notamment en raison des imperfections de montage, les couples transmis par le joint entraînent des composantes d'effort axiales du croisillon sur les paliers. Ces efforts sont alternés et provoquent un déplacement relatif des deux pièces de sorte que le volume intérieur des paliers varie de manière cyclique, ce qui se traduit par des rejets de graisse et des aspirations du milieu extérieur. Par suite lorsque le cardan se trouve dans un milieu agressif il est rapidement détérioré par grippage et oxydation de l'intérieur des paliers. Ceci est particulièrment le cas du cardan "bas" d'une colonne de direction de véhicule automobile qui est souvent situé à l'extérieur de l'habitacle. Il est donc soumis à l'agression d'éléments extérieurs tels que la boue, le sable, les graviers, en hiver l'eau salée...etc.

Pour éviter cette détérioration qui peut être une source importante de danger dans le cas d'une colonne de direction, on monte souvent sur le joint de Cardan une manchette ou un soufflet souple qui l'enveloppe complètement et est serré sur chacun des moyeux des fourches. Outre son encombrement ce soufflet a l'inconvénient de limiter la liberté de déplacement angulaire du joint. En outre, il ne peut être utilisé qu'avec des fourches ayant un moyeu tubulaire.

Il est également connu d'après les brevets français 2 149 843 et 2 349 765 d'utiliser un joint d'étanchéité élastique, unique et continu qui assure simultanément l'étanchéité de tous les paliers. Toutefois, le joint d'étanchéité décrit dans le FR-A- 2 149 843 est moulé directement sur le croisillon, ce que pose un problème de fabrication et interdit de l'utiliser comme réserve de lubrifiant.

Le joint d'étanchéité du FR-B- 2 349 765 présente l'avantage de former une réserve de lubrifiant mais pose également un problème de montage car il doit obligatoirement être mis en place lors de l'assemblage du croisillon, ainsi qu'un problème d'efficacité du fait même de son élasticité.

La présente invention a pour but de remédier à ces inconvénients en fournissant un dispositif qui assure une protection mécanique du croisillon des paliers et des joints d'étanchéité contre les projections extérieures et que en outre peut éventuellement constituer une réserve de graisse, tout en étant facile à mettre en place même sur un joint de cardan déjà assemblé.

Cette invention a en effet pour objet un dispositif de protection pour un joint de cardan comportant un croisillon dont chaque extrémité est placée dans un palier, et un joint d'étanchéité fermant l'entrée de chaque palier, caractérisé en ce que ce dispositif est constitué par un boîtier creux en un matériau rigide, étanche à l'eau et résistant à la corrosion et aux chocs, formé par deux coquilles symétriques que comportent chacune un fond plein et quatre côtés ayant des évidements semi-circulaires de diamètre sensiblement égal au diamètre extérieur des paliers du croisillon à protéger et qui sont assemblées l'une à l'autre entre ces évidements.

Selon un mode de réalisation un joint d'étanchéité est monté sur le pourtour interne de chacun des orifices latéraux du boîtier.

Le boîtier peut en outre contenir une graisse consistante non corrosive.

Un tel boîtier empêche par sa seule présence les matériaux agressifs extérieurs, que ce soit de l'eau, de la boue ou autre, d'accéder à l'entrée du palier et même d'entrer en contact avec le joint d'étanchéité que ferme ce dernier. En outre, la graisse, lorsqu'elle est présente à l'intérieur du boîtier, joue à la fois le rôle d'élément d'étanchéité et le rôle de réserve de graisse lors du phénomène d'aspiration vers l'intérieur du palier.

Le boîtier étant formé par deux coquilles rigides, peut à volonté être monté sur le croisillon avant l'assemblage de celui-ci dans les branches des fourches, ou être mis en place sur un joint de cardan déjà assemblé, avec toute la précision désirée.

La description ci-dessous de modes de réalisation, donnés à titre d'exemple non limitatif et représenté aux dessins annexés, fera d'ailleurs ressortir les avantages et caractéristiques de l'invention.

Sur ces dessins:

- la Fig. 1 est une vue de perspective d'un joint de cardan muni d'un dispositif de protection suivant l'invention ;

- la Fig. 2 est une vue du joint de cardan muni d'un dispositif de protection, en coupe selon un plan perpendiculaire à l'axe commun des deux fourches, placées coaxialement ;

- la Fig. 3 est une vue éclatée d'un croisillon et de son dispositif de protection,

- la Fig. 4 est une vue de dessous de la coquille supérieure du dispositif de protection de la Fig. 3 selon une variante de réalisation.

- la Fig. 5 est une vue en coupe suivant la ligne 5-5 de la Fig. 4,

- la Fig. 6 est une vue en coupe diagonale d'un dispositif de protection selon une autre variante de réalisation.

Le joint, auquel est destiné l'invention est un joint classique de cardan, et comporte deux fourches respectivement 1 et 2, entre les branches 3 et 4 desquelles est insérré un croisillon 6. Chacune des extrémités 8 du croisillon 6 est en fait insérrée à l'intérieur d'un palier, formé par exemple par une douille à aiguilles 10, que est fermé à une extrémité par un fond 12 et à son extrémité opposée par un joint d'étanchéité 14 interposé entre lui et un épaulement 16 du croisillon. Lors de l'assemblage du joint de cardan, chacune des douilles 10 est emmanchée dans un alésage 18 de l'une des branches 3, 4 des fourches.

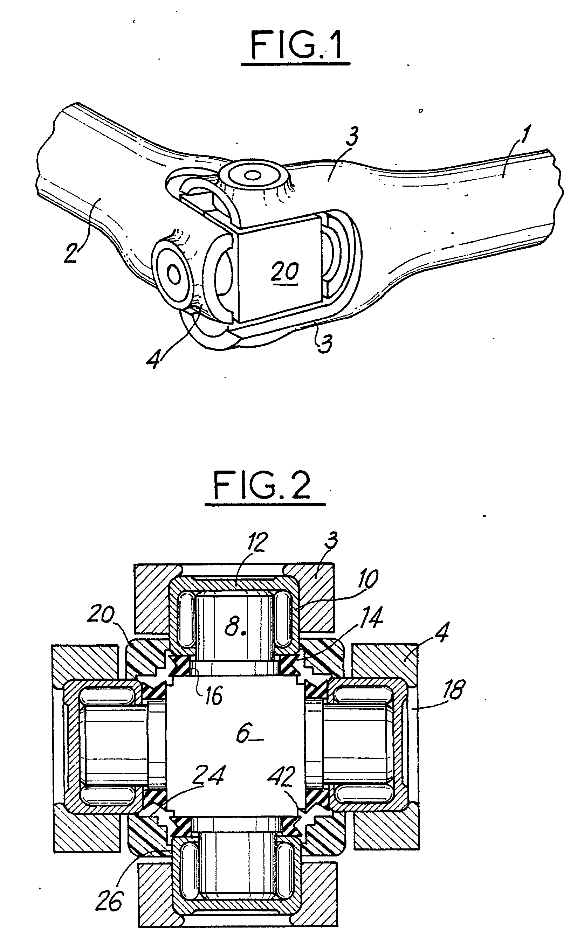

Selon l'invention l'accès à l'intérieur des douilles 10 est en outre interdit par la présence d'un boîtier de protection 20 qui, comme le montre la Fig. 2, est enfilé sur ces douilles et entoure la partie centrale du croisillon 6 ainsi que l'ensemble des joints d'étanchéité 14. Le boîtier 20 a de préférence la forme d'un cube creux ayant entre deux fonds pleins 21 quatre parois latérales 22, percées chacune d'un évidement interne circulaire 24 qui est prolongé coaxialement par un orifice 26 ayant un diamètre plus petit voisin du diamètre extérieur des douilles 10.

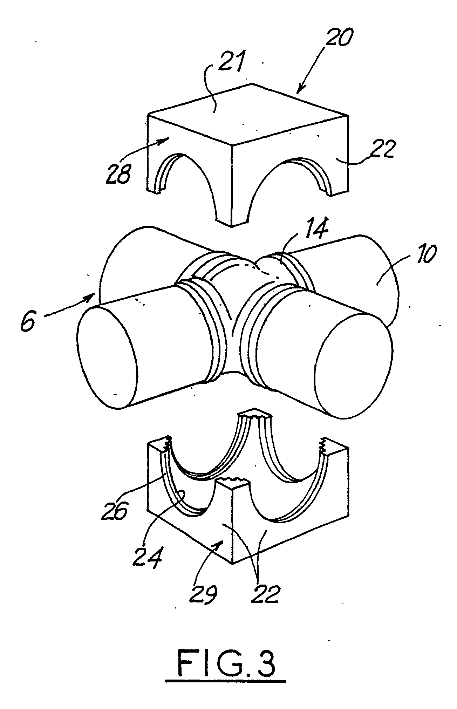

Le boîtier 20 est réalisé en une matière étanche à l'eau et résistant à la corrosion et aux chocs. Il est formé par deux coquilles symétriques telles que les coquilles 28 et 29 représentées sur la Fig. 3. Ces coquilles sont réalisées, par exemple par moulage en un matériau rigide tel qu'un polyacétal dans les nuances DELRIN 900 F, et sont simplement emboîtées sur le croisillon. Leur assemblage l'une sur l'autre peut être effectué par collage, rivetage à chaud ou tout autre moyen.

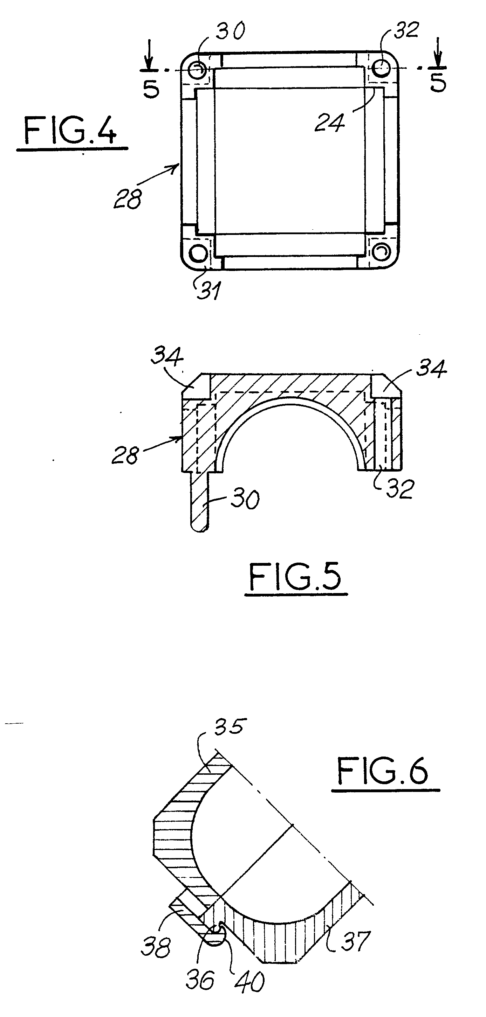

Dans le mode de réalisation préféré, représenté sur les Figs 4 et 5, chacune des coquilles 28 et 29 comporte dans deux de ses coins opposés 27 un ergot 30 en saillie axiale et dans les deux autres coins 31 un logement 32 de réception de l'ergot 30 de la coquille opposée.. Les deux coquilles sont alors facilement assemblées l'une à l'autre par emboîtement axial des ergots 30 dans les logements et cet emboîtement peut être effectué soit sur le croisillon lui même avant son assemblage dans les fourches 1 et 2, soit après l'assemblage total du joint par glissement de chacune des coquilles entre les branches 3 et 4 des fourches. Dans certain cas il est même possible de monter le dispositif de protection sur un cardan déjà monté en position d'utilisation.

De préférence, les quatre coins de chacune des coquilles sont évidés comme représenté en 34 sur la Fig. 5, ce qui d'une part réduit l'encombrement du boîtier de protection et d'autre part établit une communication entre le logement 32 et l'extérieur de sorte qu'il est possible d'atteindre l'ergot 30 introduit dans ce logement et de le souder sur la coquille correspondante. Les deux coquilles sont ainsi rendues étroitement solidaires et sont assemblées l'une à l'autre de façon rigoureusement étanche.

Selon une variante de réalisation (Fig. 6) sur chacune des coquilles 35, 37 les ergots et les logements sont remplacés les uns par des saillies radiales 36 et les autres par des pattes 38 terminées par des crochets 40 d'encliquetage sur les saillies 36. Dans ce cas comme dans le précédent le boîtier de protection peut être monté sur le croisillon avant son montage dans les fourches 1 et 2 ou être mis en place dans le cardan lui-même après son assemblage.

Si nécessaire un joint d'étanchéité peut être prévu sur le pourtour de chaque orifice 24. Dans tous les cas, le boîtier 20 interdit absolument tout accès à l'intérieur des douilles 10, quels que soient les déplacements axiaux relatifs des extrémités du croisillon et de ces douilles. Aucun grippage ni oxydation des organes n'est plus à craindre même si le cardan est placé dans un milieu particulièrement humide ou particulièrement agressif tel que des graviers ou des agents de décapage haute pression utilisés pour le nettoyage des véhicules.

De préférence le boîtier 20 contient une graisse ou une autre composition à viscosité élevée, non corrosive et résistante à l'eau, qui est retenue dans l'espace 42 entre lui, les joints d'étanchéité 14, et les paliers 10 et complète l'étanchéité de sa jonction avec ces paliers. Ce matériau constitue en effet une barrière qui interdit la pénétration du milieu externe à l'intérieur du boîtier et par conséquent dans les douilles 10. En outre il forme éventuellement une réserve de graisse qui peut être aspirée à l'intérieur des douilles 10 lors des variations du volume intérieur de ces douilles. Les rejets de graisse sont alors compensés par une aspiration correspondante.

La graisse utilisée est un matériau relativement consistant qui est introduit à l'intérieur du boîtier de protection avant son montage sur le croisillon. Chacune des coquilles reçoit alors une certaine quantité de graisse avant d'être montée sur le croisillon et assemblée à l'autre coquille. La graisse remplit ainsi l'espace 42 laissé libre entre le boîtier 20 et le croisillon et s'oppose à toute introduction d'éléments extérieurs agressifs ou non.

Il n'est alors plus nécessaire que le pourtour de chacun des orifices 24 soit en contact étanche avec la surface extérieure du palier 10 correspondant, directement ou par l'intermédiaire d'un joint d'étanchéité, pour que la protection soit totale. Ceci facilite considérablement la réalisation du boîtier de protection en supprimant les exigences de précision dans les dimensions des orifices 24 et par suite réduit son coût.

Par contre le dispositif de l'invention assure une protection particulièrment efficace en permettant de combiner à la protection mécanique fournie par le boîtier une barrière visqueuse et même une réserve de graisse.

Par ailleurs, le boîtier 20 ne modifie pas l'encombrement du joint de cardan et on constate qu'il n'a aucune influence sur la liberté de mouvement des fourches, qui rest entière. Il peut donc être adapté à tous les joints de cardan quelles que soient leur utilisation et leur dimension, quelle que soit la forme des moyeux de leurs fourches.

**Revendications**

1. Dispositif de protection pour un joint de cardan, comportant un croisillon dont chaque extrémité est placée dans un palier, et un joint d'étanchéité fermant l'entrée de chaque palier, caractérisé en ce que ce dispositif est constitué par un boîtier creux (20) en un matériau rigide, étanche à l'eau et résistant à la corrosion et aux chocs, formé par deux coquilles symétriques (28 et 29) qui comportent chacune un fond plein et quatre côtés (22) ayant des évidements semi-circulaires (24, 26) de diamètre sensiblement égal au diamètre extérieur des paliers du croisillon à protéger, et qui sont assemblées l'une à l'autre centre ces évidements.

2. Dispositif suivant la revendication 1, caractérisé en ce que le boîtier creux (20) a une forme cubique.

3. Dispositif selon l'une des revendications 1 et 2, caractérisé en ce que chaque coquille (28, 29) comporte dans deux coins ( 27) un ergot (30) en saillie axial et dans les deux autres coins (31) des logements (32) de réception de l'ergot de la coquille opposée.

4. Dispositif suivant l'une des revendications 1 et 2, caractérisé en ce que chaque coquille (35, 37) comporte dans deux coins une saillie radiale (36) et dans les deux autres un crochet (40) d'encliquetage sur la saillie de la coquille opposée.

5. Dispositif suivant l'une des revendications précédentes, caractérisé en ce qu'il comporte à l'intérieur du boîtier (20) une graisse consistante non corrosive.

6. Dispositif suivant l'une des revendications précédentes, caractérisé en ce qu'il comporte un joint d'étanchéité sur la surface interne de chaque orifice (24).

7. Croisillon de joint de cardan dont chacune des extrémités est placée dans un palier fermé par un joint d'étanchéité, caractérisé en ce qu'il comporte un boîtier de protection (20) selon l'une des revendications précédentes qui entoure sa partie centrale, les joints d'étanchéité (14) et les entrées des paliers (10).

8. Joint de cardan, caractérisé en ce qu'il comporte entre ses branches un croisillon (6) suivant la revendication 7.

## FIG.1

## FIG.2

FIG.3

FIG.4

30    32

24

28

31

FIG.5

34    34

28

30    32

FIG.6

35

38

36    40    37

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| E | FR-A-2 609 124 (PEUGEOT) <br> * En entier * <br> --- | 1-8 | F 16 D 3/41 <br> F 16 C 33/78 |
| A | GB-A-2 052 015 (UNI-CARDAN) <br> --- | | |
| A | GB-A- 628 653 (BORG-WARNER) <br> ----- | | |

DOMAINES TECHNIQUES
RECHERCHES (Int. Cl.4)

F 16 D
F 16 C

Le présent rapport a été établi pour toutes les revendications

| Lieu de la recherche | Date d'achèvement de la recherche | Examinateur |
|---|---|---|
| LA HAYE | 31-10-1988 | BALDWIN D.R. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P0402)